# EUROPÄISCHE PATENTANMELDUNG

(11) **EP 3 056 694 A1**
(43) Veröffentlichungstag der Anmeldung: **17.08.2016**
(21) Anmeldenummer: 16152260.2
(22) Anmeldetag: 21.01.2016
(51) Int. Cl.: F01K 3/00, F01K 3/12, F01K 3/16, F01K 9/02, F01K 13/00, F01K 19/02, F01K 25/08

(54) **DRUCK-ENERGIESPEICHER MIT THERMISCHER KONDENSATPUMPE**

(30) Priorität: 12.02.2015 DE 102015001807
(71) Anmelder: Wissing, Volker, 48155 Münster (DE)
(72) Erfinder: Wissing, Volker, 48155 Münster (DE)

(57) **Zusammenfassung**

Zusammenfassung: Die Erfindung betrifft einen Druck-Energiespeicher mit thermischer Kondensatpumpe (1) mit mindestens zwei Druck-Behältern (11, 19), mindestens einem Wärmeenergiespeicher (15), mindestens einer Expansionsmaschine (2), sowie mindestens ein in geschlossenem thermodynamischen Kreisprozess verwendetes Arbeitsmedium (9,10, 21, 22). Die Druck-Behälter (11, 19) enthalten Kältemittel wie beispielweise R744 oder R134a als Flüssigkeiten (10, 21), die Gasvolumen (9, 22), eine Heizeinheit (16) oberhalb der Flüssigkeitslinie des Druckbehälter (11), eine Heizeinheit (20) im Bereich unterhalb der Flüssigkeitslinie der Flüssigkeit (21) des Behälter (19) sowie mindestens zwei Füllstandsensoren (8, 23). Die Erfindung (1) mit den in Förderrichtung hinter der Fördereinheit (13) eingesetzten steuerbaren Ventile (12,14), der Wärmeenergie aus Wärmequelle (15) sowie den Heizeinheiten (16,20) ist je nach Ansteuerung der Ventile (12,14) zur effizienten Speicherung von Energie sowie zur direkten Erzeugung mechanischer Arbeit oder auch Produktion elektrischer Energie mit Expansionsmaschine (2) sowie Generator (3) geeignet. Der Einsatz von elektrischen oder mechanischen Pumpen zum Transport des flüssigen Arbeitsmedium (10,21) entfällt erfindungsgemäß.

## Beschreibung

Die Erfindung betrifft das oberbegrifflich Beanspruchte und bezieht sich somit darauf, wie mit Wärmeenergie und Druckspeichern unter Einsatz thermisch getriebener Kondensatpumpen und somit ohne Einsatz mechanisch oder elektromotorisch getriebener Kondensat-Pumpen, nach Bedarf mechanische oder elektrische Arbeit verrichtet werden kann.

Druck-Energiespeicher werden in bekannten Formen vorzugsweise zur wahlweisen Speicherung von Energieformen wie mechanische, elektrische oder Wärme-Energie sowie der Erzeugung mechanischer oder elektrischer Energie bei Bedarf eingesetzt. Hierbei sind offene sowie geschlossene Kreisläufe in Bezug auf die eingesetzten Arbeitsmedien zu unterscheiden.

Weiterhin sind als Stand der Technik bekannt und zu unterscheiden Systeme, in deren Kreislauf ein Arbeitsmedium wie beispielsweise Luft in Druckspeicher-Räumen gasförmig gespeichert werden, von Systemen, bei denen Arbeitsmedien unter Druck in Druckspeicher-Räumen gleichzeitig sowohl in flüssiger als auch in gasförmiger Form vorliegen wobei hier meist geschlossene Systeme zum Einsatz kommen.

Bei den genannten Verfahren zur Zwischenspeicherung von Energie kommen üblicherweise Elektro-Generatoren in Verbindung mit Expansionsmaschinen wie beispielsweise Kolben-, Lamellen-, Schrauben-, Wankel- oder Turbinen-Expansionsmaschinen zur Generierung elektrischer Energie im Bedarfsfall zum Einsatz, um die unter Druck stehenden Arbeitsmedien zu expandieren und die damit entstehende Volumenarbeit des expandierenden Arbeitsmedium zu nutzen. Die dabei zum Einsatz kommenden Verfahren werden ebenfalls als Stand der Technik betrachtet.

Als Stand der Technik der zuvor genannten Verfahren ist ihnen gemeinsam, dass üblicherweise mindestens eine Hochdruck- und mindestens ein Niederdruck-Seite vorhanden ist, welche durch die Expansions-Maschine im Rahmen einer kontrollierten Druckminderung in Verbindung stehen. Dieser Druckunterschied zwischen Nieder- und Hochdruck-Seite wird bei geschlossenen Systemen mit teils flüssigen sowie gasförmigen Arbeitsmedien zur Beladung des Hochdruckspeicher durch Rücktransport des üblicherweise zuvor verflüssigten Arbeitsmedium des Energiespeichers durch mechanisch oder elektrisch angetriebene Kondensat-Pumpen überwunden.

Der Einsatz von Kondensat-Pumpen erhöht die Investitions- sowie Betriebs-Kosten solcher Verfahren und stellt, aufgrund von Pumpenverlusten und üblicherweise gerade bei kleinen und mittelgroßen Systemen eingesetzten elektrisch angetriebenen Kondensat-Pumpen, durch Einsatz einer kostenseitig preisintensiven Energieform, ein verbesserungswürdiges Kondensat-Beladungssystem dieser Verfahren dar. Weiterhin sind somit zusätzliche bewegte Maschinenteile im Einsatz, welche regelmäßigen hohen Belastungen ausgesetzt sind und somit zusätzliche Wartungs- sowie Reparatur-Kosten mit sich bringen.

Bei Systemen mit rein gasförmigen Arbeitsmedien, wie beispielsweise Luft, werden zur Beladung der Druckspeicher leistungsfähige Pumpen und Kompressoren ohne oder mit teilweiser Wärmerückgewinnung eingesetzt. Die Verfahren unter Einsatz von Kompressoren zur Förderung der rein gasförmigen Medien von der Niederdruck- zur Hochdruck-Seite stellen aufgrund der systembedingten Verluste beim Kompressionsvorgang grundsätzlich ein sich negativ auf den Gesamtwirkungsgrad der Systeme auswirkenden Faktor dar. Prinzipbedingt befasst sich die Erfindung mit als Kondensat auch verflüssigt vorliegenden Arbeitsmedien.

Wünschenswert wäre ein Verfahren zur Beladung des Hochdruckspeicher geschlossener Systeme von Druckspeicherkraftwerken, bei dem im Gegensatz zu bekannten Verfahren, wie beispielsweise in Patenten DE 202009003297 U1, DD 000000137753 A1 beschrieben, keine mechanisch oder elektrisch getriebenen Kondensat-Pumpvorrichtungen mit verschleißanfälligen, kostenintensiven und den Gesamtwirkungsgrad mindernde Pumpen zum Einsatz kommen. Andersartige Kältemittel-Wärmekraftmaschinen sind auch beschrieben in den Patenten DE 101 26 403 A 1, US 2006/0059912 A1, U.S. Patent 4,006,595 und U.S. Patent 5,548,957.

Weiterhin wäre es wünschenswert den beschriebenen Umlade-Vorgang des Arbeitsmedium-Kondensat, wie beispielsweise Kohlenstoffdioxid (CO2), auf Basis der, im Vergleich zu elektrischer Energie, günstigeren, in potentiell einzubindenden Wärmespeichern solcher Systeme vorhandenen Wärmeenergie durchzuführen. Dies würde neben Effizienzsteigerung solcher Systeme ebenfalls die Komplexität und somit den Kostenfaktor in der Form beeinflussen, dass selbst kleine Anlagen ökonomisch sinnvoll und wartungsarm zu betreiben sind. Weiterhin bieten sich somit Wärmequellen, wie beispielsweise Prozess-Abwärme oder allgemein über Wärmetauscher gewonnene Wärmeenergie, als Energiequellen auch für den Umlade-Vorgang des flüssigen Arbeitsmedium aus dem Kondensat-Sammelbehälter in den Hochdruck-Speicher an.

Ebenfalls wünschenswert ist, im Vergleich zu reinen Druck-Speichern mit verhältnismäßig großen Volumen zur Speicherung der verwendeten komprimierten Arbeitsmedien, eine Speicherung der zur in einer Expansionsmaschine genutzten Volumen-Arbeit verwendete Energie-Form mit hoher Energiedichte sowie geringem konstruktiven Aufwand des Speicher-Raum zu realisieren.

Es ist wünschenswert, zumindest eines der angesprochenen Probleme einer mindestens partiellen Linderung zuzuführen.

Der Erfindung liegt die Aufgabe zugrunde, Neues zur gewerblichen Anwendung eines gattungsgemäßen Druck-Energiespeicher mit thermisch angetriebener Kondensat-Pumpe, in dem zum Pumpen des Kondensats keine mechanisch oder elektrisch getriebenen Kondensat-Pumpvorrichtungen vorgesehen sind, bereit zu stellen.

Die Lösung dieser Aufgabe wird in unabhängiger Form beansprucht. Bevorzugte Ausführungsformen finden sich in den Unteransprüchen.

Der erfindungsgemäße Druck-Energiespeicher mit thermischer Kondensat-Pumpe weist mindestens einen Wärmespeicher zur Speicherung der zur Kondensat-Beladung eines Hochdruckspeicher und die für den Betrieb des System notwendige Beheizung des Hochdruckspeicher verwendeten Wärmeenergie auf. Weiterhin weist die Erfindung mindestens zwei Druckbehälter für das teilweise flüssige wie auch gasförmige Arbeitsmedium, wie beispielsweise Kohlenstoffdioxid, auf, wobei ein Druckbehälter als Hochdruckspeicher und der zweite Druckbehälter als Kondensat-Sammelbehälter verwendet wird. Der Hochdruckspeicher mit dem für die Energiegewinnung zu expandierenden flüssigen Arbeitsmedium, nachfolgend Hochdruckspeicher genannt, weist idealerweise im unteren, hauptsächlich unterhalb der Flüssigkeitslinie des Arbeitsmedium liegenden, Bereich dieses Hochdruckspeicher eine erste Heizeinrichtung, beispielsweise in Form einer Heizwendel, auf, welche über eine Fördereinheit wie beispielsweise einer Umwälzpumpe sowie einer der ersten Heizeinrichtung zugeordneten steuerbaren Ventileinheit dem flüssigen Arbeitsmedium Wärme-Energie aus dem Wärmespeicher zuführt.

In einer weiteren Variante der Erfindung wird die Beheizung des Arbeitsmedium im Hochdruckspeicher über den kritischen Punkt des Arbeitsmedium hinaus in den trans- oder auch überkritischen Bereich vorgenommen. Nachfolgend beschriebene Komponenten der Erfindung sind darauf hin auszulegen. Die Einsatzbedingungen sind hier jedoch Anlagenspezifisch zu prüfen gerade im Bezug auf die Auswirkungen bezüglich des zu erwartenden Wirkungsgrades in Verbindung mit dem eingesetzten Arbeitsmedium in trans- sowie überkritischen Betriebsmodi. Der Betrieb eines solchen Druck-Energiespeichersystem im transsowie überkritischen Bereich wird ebenfalls als Stand der Technik angenommen.

Es ist weiterhin bevorzugt, dass der zweite Druckbehälter, als Kondensat-Sammelbehälter, mit einer zweiten Heizeinrichtung, beispielsweise in Form einer Heizwendel, im Bereich oberhalb der Flüssigkeitslinie des flüssigen Arbeitsmedium, idealerweise im oder auch am Kondensat-Sammelbehälter, ausgestattet wird. Idealerweise wird auch diese zweite Heizeinrichtung durch eine Fördereinheit in Verbindung mit einer der zweiten Heizeinrichtung zugeordneten steuerbaren Ventileinheit bei Bedarf mit Wärmeenergie beladen, um den Gasdruck in diesem Kondensat-Sammelbehälter zum Zweck des Umpumpen des flüssigen Kondensat zeitweise zu erhöhen und so die Beladung des Hochdruckspeicher mit flüssigem Arbeitsmittel zu initiieren.

Weiterhin werden der Hochdruckspeicher und der Kondensat-Sammelbehälter des erfindungsgemäßen Druck-Energiespeicher mit thermischer Kondensatpumpe durch eine, dem Kondensat-Sammelbehälter zugeordnete, Kondensat-Leitung mit mindestens einer, dem Kondensat-Sammelbehälter zugeordneten, als Rückschlagventil ausgeprägten Ventileinheit ausgeführt, welches die Kondensat-Förderung vom Kondensat-Sammelbehälter zum Hochdruckspeicher, bei Überdruck im Kondensat-Sammelbehälter gegenüber dem Hochdruckspeicher, zulässt, während der Kondensat-Rückfluss vom Hochdruckspeicher zum Kondensat-Sammelbehälter durch die Ventileinheit unterbunden ist. Idealerweise werden Kondensat-Leitungen unterhalb der Flüssigkeitslinie, möglichst am tiefst gelegenen Punkt, beider Druckbehälter angebracht.

Vorzugsweise werden sowohl der Kondensat-Sammelbehälter wie auch der Hochdruckspeicher der Erfindung mit jeweils mindestens einem Pegel-Sensor zur Kontrolle der Pegel des verwendeten flüssigen Arbeitsmedium ausgestattet.

Idealerweise wird das in den Heizeinrichtungen des Hochdruckspeicher sowie vor allem des Kondensat-Sammelbehälter verwendete Wärmeträger-Medium so gewählt, dass dieses bei verschlossenen, der Fördereinheit nachgelagerten, steuerbaren Ventile in den Heizeinrichtungen nicht gefriert, wie dies bei reinem Wasser geschehen würde. Hierzu sind die Medien in den Heizkreisen beispielsweise mit Frostschutzmitteln entsprechend einzustellen oder andere Prinzipien der Wärmeübertragung zu wählen.

Erfindungsgemäß ist idealerweise am, aus axialer Sicht, höchsten Punkt des Hochdruckspeicher der Anschluss einer in Strömungsrichtung dem Hochdruckspeicher nachgelagerten Verbindung zur Expansionsmaschine vorgesehen, welche das im Hochdruckspeicher gasförmige Arbeitsmedium der Expansionsmaschine zur Verrichtung von Volumenarbeit durch Expansion zuführt. Eine bevorzugte Variante der Erfindung ist die Kopplung eines Elektro-Generator an die Expansionsmaschine zur Erzeugung elektrischer Energie.

Zur Sicherstellung der Verdampfungs-Leistung im Hochdruckspeicher kann je nach Dimensionierung eines solchen erfindungsgemäßen Druck-Energiespeicher mit thermischer Kondensatpumpe auf bekannte Verfahren, die als Stand der Technik gelten, wie parallelgeschaltete Hochdruck-Behälter, beispielsweise Stahlflaschen oder den Einsatz von zusätzlichen Verdampfern, zurück gegriffen werden. Weiterhin kann auch die Beaufschlagung von Teilen der Expansionsmaschine mit Wärmeenergie je nach eingesetztem Expansions-Maschinentyp sinnvoll sein.

Es ist bevorzugt die Expansion des Arbeitsmedium in der Expansionsmaschine in der Art zu dimensionieren, dass der Austrittsdruck des Arbeitsmedium an der Expansionsmaschine in jedem Betriebszustand des erfindungsgemäßen Druck-Energiespeicher mit thermischer Kondensatpumpe mit Sicherheit oberhalb des Tripelpunkt des verwendeten Arbeitsmedium, wie beispielsweise Kohlenstoffdioxid, ist, falls ein solcher Tripelpunkt für das verwendete Arbeitsmedium existiert. Bei einem Eingangsdruck von beispielsweise 65 Bar wird ein Ausgangsdruck von beispielsweise 15-20 Bar gewählt.

Es ist weiterhin bevorzugt den geplanten Austrittsdruck des Arbeitsmedium am Ausgang der Expansionsmaschine des erfindungsgemäßen Druck-Energiespeicher mit thermischer Kondensatpumpe höher als den für den Tripelpunkt bekannten Druck wie beispielsweise 5,2 Bar für Kohlenstoffdioxid zu dimensionieren, also beispielsweise 15-20 Bar, damit in Strömungsrichtung des Arbeitsmedium, der Expansionsmaschine nachgelagert, mindestens eine schalt- sowie regelbare, als Rückschlagventil ausgeprägte, Drosseleinheit integriert werden kann, um eine weitere Drosselung sowie über den Joule-Thomson-Effekt beschriebene Abkühlung des Arbeitsmedium zwecks Kondensation in Richtung Kondensat-Sammelbehälter zu erzielen. Idealerweise wird die Verbindung zwischen Drosseleinheit und Kondensat-Sammelbehälter im Kondensat-Sammelbehälter bis möglichst unterhalb der minimalen Flüssigkeitslinie geführt.

In einer weiteren optionalen Variante der Erfindung kann, zur Sicherstellung der Kondensation des Arbeitsmedium in Strömungsrichtung nach der Drosseleinheit, die Verbindung zwischen Expansionsmaschine und Drosseleinheit zur Vorkühlung des Arbeitsmedium wärmeleitend um oder auch durch den unterhalb der Flüssigkeitslinie des Kondensat-Sammelbehälter liegenden Teil dieses Behälter geführt werden. Alternativ ist Sicherstellung der Kondensation des Arbeitsmedium auch die Verwendung von Wärmetauschern in der Form vorgesehen, die Verbindung zwischen Expansionsmaschine und Drosseleinheit mit der Verbindung zwischen Drosseleinheit und Kondensat-Sammelbehälter thermisch zu koppeln. Der Druck im Kondensat-Sammelbehälter wird somit auf beispielsweise 15 Bar bei einer Temperatur von -28,5°C gemäß Dampfdruckkurve für das beispielhafte Arbeitsmedium Kohlenstoffdioxid eingestellt.

Idealerweise wird der gesamte erfindungsgemäße Druck-Energiespeicher mit thermischer Kondensatpumpe sowohl zur Verhinderung von Vereisung mit Luftfeuchtigkeit als auch zur weitgehenden Unterbindung von Wärmeverlusten mit einem feuchtigkeitsbeständigen Isolierstoff isoliert. Besonderes Augenmerk ist dabei auf die Komponenten der Expansionsmaschine, der Verbindungen zwischen Expansionsmaschine und Drosseleinheit sowie zwischen Drosseleinheit und Kondensat-Sammelbehälter, der Kondensat-Leitung zwischen Kondensat-Sammelbehälter und Hochdruck-Speicher sowie der dem Kondensat-Sammelbehälter zugeordneten, als Rückschlagventil ausgeprägten Ventileinheit zu legen.

Weiterhin sollten je nach Betriebsbedingungen Maßnahmen wie beispielsweise gesonderte ventilgesteuerte Heizschleifen zur möglichen Enteisung der Expansionsmaschine sowie Drosseleinheit vorgesehen werden.

Es ist bevorzugt Drucksensoren (Manometer) in den Verbindungen des erfindungsgemäßen Druck-Energiespeicher mit thermischer Kondensatpumpe sowohl zwischen Hochdruck-Speicher und Expansionsmaschine, Expansionsmaschine und Drosseleinheit als auch zwischen Drosseleinheit und Kondensat-Sammelbehälter zu installieren.

Erfindungsgemäß ist bevorzugt die Steuerung des Druck-Energiespeicher mit thermischer Kondensatpumpe und die damit verbundenen Regelvorgänge über eine SPS (speicherprogrammierbare Steuerung) in Verbindung mit den Werten der Druck-Sensoren, Pegel-Sensoren, den Schaltzuständen aller Ventileinheiten, Fördereinheit, Generator sowie Wärmespeicher vorzunehmen. Hierbei sind zu unterscheiden der Entlade-Vorgang (Generatorbetrieb) vom Umlade-Vorgang (Kondensat-Umladung) des erfindungsgemäßen Druck-Energiespeicher mit thermischer Kondensat-Pumpe.

Idealerweise sind die Kondensat-Menge sowie die Volumina von Hochdruckspeicher sowie Kondensat-Sammelbehälter des erfindungsgemäßen Druck-Energiespeicher mit thermischer Kondensatpumpe in der Art vorgesehen, dass der Kondensat-Sammelbehälter mindestens das Volumen des Hochdruck-Speicher aufweist und die Kondensat-Menge des System beispielsweise etwa 80% des Volumen des Hochdruck-Speicher entspricht, um somit die Volumina der Druckbehälter sowie das Energiespeicherpotential (Speicherkapazität) der Kondensat-Menge in Verbindung mit der durch den Wärmeenergie-Speicher zugeführten Energie möglichst umfänglich zu nutzen, bevor ein erneuter Kondensat-Umladevorgang notwendig wird.

Erfindungsgemäß, ausgehend von einem mit Kondensat gefüllten Hochdruckspeicher sowie einem weitgehend geleertem Kondensat-Sammelbehälter, wird dem Hochdruckspeicher über die Fördereinrichtung, wie beispielsweise einer Umwälzpumpe und dem geöffneten, der dem Hochdruckspeicher zugeordneten, Ventileinheit über die erste Heizeinrichtung am oder im Hochdruckspeicher Wärmeenergie zugeführt. Dies führt zum Druckanstieg gemäß der Dampfdruckkurve für das verwendete Arbeitsmedium wie beispielsweise CO2 (Kohlenstoffdioxid). Die dem Kondensat-Sammelbehälter zugeordnete, als Rückschlagventil ausgeprägte, Ventileinheit ist dabei geschlossen. Der Heizvorgang des Hochdruckspeicher wird über die speicherprogrammierbare Steuerung (SPS) im zuvor festgelegten Druck-Bereich am Drucksensor des Hochdruckspeicher, beispielweise bis 65 Bar, vorgenommen und mit Hilfe der zugeordneten Ventileinheit über eine speicherprogrammierbare Steuerung (SPS) gesteuert.

Der Druck gegenüber dem Kondensat-Sammelbehälter ist erfindungsgemäß nun erhöht, so dass der Entlade-Vorgang über die Expansionsmaschine und einem damit gekoppelten Generator durch Expansion des unter Druck stehenden gasförmigen Arbeitsmedium erfolgt. Die in Strömungsrichtung hinter der Expansionsmaschine angebrachte schalt- sowie regelbare Drosseleinheit sollte erst dann geöffnet werden, wenn der für einen vereisungsfreien Betrieb erforderliche Druck an den Drucksensoren vor der Drosseleinheit erreicht ist. Die durch die Expansion des gasförmigen Arbeitsmedium verfügbare Volumenänderung wird in der Expansionsmaschine teilweise in mechanische Arbeit umgesetzt. Die dabei nach dem bekannten Joule-Thomson-Effekt einhergehende Druckänderung bringt bekanntermaßen eine entsprechende Temperaturänderung mit sich, welche bei den beschriebenen Bedingungen für CO2 unterhalb der Inversionstemperatur negativ ist und somit sowohl die Temperatur als auch der Druck in Strömungsrichtung hinter der Expansionsmaschine sinkt.

Erfindungsgemäß wird die in Strömungsrichtung nachgelagerte schalt- sowie regelbare Drosseleinheit mit Rückschlagventil-Funktion entsprechend den eingehenden Parametern der speicherprogrammierbaren Steuerung (SPS) in der Form gesteuert, dass der Druck, in Strömungsrichtung, hinter der Drosseleinheit zur Verhinderung von Vereisung beispielsweise 12-15 Bar nicht unterschreitet. Das aus der Drosseleinheit ausströmende Arbeitsmedium befindet sich im Sattdampfbereich und kondensiert im Kondensat-Sammelbehälter, wo der Kondensat-Pegel während des Entlade-Vorgang (Generatorbetrieb) somit stetig steigt. Erfindungsgemäß wird der Pegelstand im Kondensat-Sammelbehälter mit dem ihm zugeordneten Pegel-Sensor als Eingangsgröße der speicherprogrammierbaren Steuerung (SPS) ebenfalls überwacht.

Ist der Flüssigkeits-Pegel im Kondensat-Sammelbehälter des erfindungsgemäßen Druck-Energiespeicher mit thermischer Kondensatpumpe bis zum maximal vorgesehenen Wert angestiegen, wird erfindungsgemäß der Umlade-Vorgang des flüssigen Kondensat eingeleitet. Hierzu wird in zeitlicher Abfolge zuerst die Ventileinheit des Heizkreislauf des Hochdruck-Speicher geschlossen. Durch die noch anhaltende Verdampfung des flüssigen Arbeitsmedium, welches noch in geringer Menge im Hochdruckspeicher vorhanden ist, erfolgt durch den Verdampfungsprozess eine Abkühlung und somit eine Druckminderung im Hochdruck-Speicher. Dieser Prozess kann so lange fortgeführt werden, bis die schalt- sowie regelbare Drosseleinheit mit Rückschlagventil-Funktion geschlossen wird, beispielsweise mit einem Schalter oder zeitlich definiert, nachgelagert nach Abschaltung des Heizvorgang des Hochdruck-Speicher.

Tritt keine der Bedingungen ein, so wird erfindungsgemäß der Druck der der Expansionsmaschine nachgelagerten Drucksensoren darauf hin überwacht, ob der eingestellte Mindestdruck von beispielsweise 12-15 Bar an einem der Sensoren unterschritten wird. Tritt diese Bedingung ein, wird, über die speicherprogrammierbare Steuerung (SPS) gesteuert, die schalt- sowie regelbare Drosseleinheit mit Rückschlagventil-Funktion geschlossen und somit der Generatorbetrieb beendet. Der Druck im Hochdruck-Speicher ist nun bereits gesunken auf beispielweise 30-40 Bar bei entsprechender Temperatur laut Dampfdruckkurve.

Erfindungsgemäß wird nun die Umladung des als Kondensat vorliegenden Arbeitsmedium begonnen. Hierzu wird nun die der Fördereinheit, wie beispielsweise einer Umwälzpumpe, nachgelagerte, dem Kondensat-Sammelbehälter zugeordnete, Ventileinheit des Wärmespeicherkreislauf geöffnet. Die Zufuhr von Wärmeenergie zur im oder am Volumen des gasförmigen Arbeitsmedium thermisch gekoppelten zweiten Heizeinrichtung des Kondensat-Sammelbehälter bewirkt nun eine rasche Steigerung des Gasdruck im Kondensat-Sammelbehälter, da nicht das gesamte flüssige Arbeitsmedium sondern lediglich das gasförmige Arbeitsmedium sowie Teile des beispielsweise Stahlbehälter des mit Kondensat gefüllten Kondensat-Sammelbehälter erwärmt werden. Die Zunahme der Gastemperatur im Kondensat-Sammelbehälter bewirkt an der Flüssigkeits-Grenzlinie hier in Grenzen zwar eine zunehmende Verdampfung mit Kühlwirkung des flüssigen Arbeitsmedium, der Gesamtdruck im Behälter steigt jedoch durch die Energiezufuhr an.

Der Druck im Kondensat-Sammelbehälter des erfindungsgemäßen Druck-Energiespeicher mit thermischer Kondensatpumpe nimmt durch die Wärmeenergiezufuhr zu, solange der Druck im Kondensat-Sammelbehälter geringer ist als im Hochdruck-Speicher. Bei Erreichen eines Überdruck im Kondensat-Sammelbehälter gegenüber dem Hochdruck-Speicher öffnet die in der Verbindung zwischen beiden Druckbehältern eingesetzte, als Rückschlagventil ausgeprägte, Ventileinheit selbsttätig, so dass das flüssige Arbeitsmedium im Kondensat-Sammelbehälter durch die Verbindung in den Hochdruck-Speicher zu strömen beginnt. Durch die anhaltende Beheizung des Volumen des gasförmigen Arbeitsmedium des Kondensat-Sammelbehälter sowie das Einströmen des im Vergleich zur Temperatur des Hochdruck-Speicher noch kälteren flüssigen Arbeitsmedium aus dem Kondensat-Sammelbehälter nimmt nun der Druckunterschied zwischen beiden Druckbehältern noch zu, so dass die Beladung des Hochdruckspeicher mit Kondensat aus dem Kondensat-Sammelbehälter beschleunigt wird. Der Heizvorgang am Kondensat-Sammelbehälter kann somit idealerweise schon vor Erreichen der Gesamtbeladung des Hochdruck-Speicher mit Kondensat beendet werden.

Erfindungsgemäß wird vor oder spätestens bei Erreichen des vorgesehenen maximalen Füllstand mit flüssigem Arbeitsmedium im Hochdruck-Speicher des erfindungsgemäßen Druck-Energiespeicher mit thermischer Kondensatpumpe die dem Kondensat-Sammelbehälter zugeordnete Ventileinheit der zweiten Heizeinrichtung geschlossen und die dem Hochdruck-Speicher zugeordnete Ventileinheit der ersten Heizeinrichtung wieder geöffnet. Hierdurch wird die Temperatur des flüssigen Arbeitsmedium im Hochdruck-Speicher erhöht, so dass der Dampfdruck in diesem Behälter steigt. Da sich hier ein Überdruck im Verhältnis zum Kondensat-Sammelbehälter einstellt, schließt die als Rückschlagventil ausgeprägte Ventileinheit in der Verbindung zwischen Kondensat-Sammelbehälter und dem Hochdruckspeicher. Der Kondensat-Umladevorgang ist somit abgeschlossen.

Der Generatorbetrieb kann bei Erreichen vorgegebener Druckwerte im Hochdruck-Speicher des erfindungsgemäßen Druck-Energiespeicher mit thermischer Kondensatpumpe wieder gestartet werden durch die bedarfsweise Öffnung der schalt- sowie regelbaren Drosseleinheit mit Rückschlagventil-Funktion. Dabei ist zu berücksichtigen, dass zu Beginn des erneuten Generatorbetrieb der Druck im Kondensat-Sammelbehälter noch erhöht ist. Dieser erhöhte Gegendruck führt Anfangs kurzfristig zu einer Minderung der Leistung an der Expansionsmaschine, wird jedoch durch die erneute Kondensat- und Sattdampf-Zuführung niedriger Temperatur aus der Drosseleinheit zunehmend abgesenkt.

Grundsätzlich stellt die Zuführung von Wärmeenergie zwecks Umladevorgang des Kondensat keinen negativen Einfluss auf den Gesamtwirkungsgrad der Erfindung dar, da dem Kondensat-Sammelbehälter zugeführte Wärmeenergie, abgesehen von möglichen Isolationsverlusten sowie verbleibender Restwärme, anschließend in Form gesteigerten Drucks bei erhöhtem Flüssigkeitspegel im Hochdruck-Speicher zur Verfügung steht und so zur Verrichtung von Volumenarbeit genutzt wird.

Eine weitere bevorzugte Variante der Erfindung ist der Betrieb einer zuschaltbaren Kühlvorrichtung zur beschleunigten Abkühlung des Kondensat-Sammelbehälter nach erfolgtem Umladevorgang des Kondensat. Dies ist jedoch unter betriebswirtschaftlichen sowie den Betriebs-Bedingungen im Einzelfall abzuwägen und stellt keine zwingend erforderliche Maßnahme zum Betrieb der Erfindung dar.

Eine weitere bevorzugte Variante der Erfindung ist die Ausführung als Druck-Energiespeicher mit thermischer Kondensatpumpe für den permanenten Betrieb im Generatorbetrieb. Die bisher beschriebenen Varianten der Erfindung haben prinzipbedingt zwecks Umladung des Kondensat vom Kondensat-Sammelbehälter in den Hochdruckspeicher die Einschränkung, dass der Generatorbetrieb hierzu zeitweise unterbrochen werden muss. Durch die mindestens parallele Ausführung des Kondensat-Sammelbehälter-Zweig mit den Komponenten schalt- sowie regelbare Drosseleinheit mit Rückschlagventil-Funktion mit nachgelagertem Drucksensor, Kondensat-Sammelbehälter mit Heizeinrichtung, Ventileinheit der Heizeinrichtung des Kondensat-Sammelbehälter, Pegel-Sensor sowie in Strömungsrichtung nachgelagerter als Rückschlagventil ausgeprägter Ventileinheit ist bedarfsweise auch ein permanenter ununterbrochener Generatorbetrieb des erfindungsgemäßen Druck-Energiespeicher mit thermischer Kondensat-Pumpe möglich.

Vorzugsweise sind hierzu die Volumina beider Kondensat-Sammelbehälter der Erfindung in der Weise zu dimensionieren, dass die Summe beider zur Kondensat-Aufnahme verfügbaren Behältervolumen der gesamten Kondensatmenge im System entspricht. Hierdurch ist sichergestellt, dass die gesamte Kondensatmenge im Bedarfsfall, beispielsweise zu Wartungszwecken, in den Kondensat-Sammelbehältern aufgenommen werden kann. Weiterhin ist im Regelbetrieb der Erfindung sicher gestellt, dass im Hochdruckspeicher stets ausreichend flüssiges Arbeitsmedium für den permanenten Generator-Betrieb zur Verfügung steht.

Der permanente Generator-Betrieb wird erfindungsgemäß durch wechselweisen Kondensations-sowie Umladungs-Prozess der Kondensat-Sammelbehälter realisiert. Hierzu wird jeweils ein Kondensat-Sammelbehälter im Kondensationsmodus betrieben, während der zweite gefüllte Kondensat-Sammelbehälter durch Zuführung von Wärmeenergie, gesteuert über die speicherprogrammierbare Steuerung (SPS), über die dem jeweiligen Kondensat-Sammelbehälter zugeordnete Heizeinrichtung in den Umlademodus durch Druckerhöhung versetzt wird. Die Zuführung von Wärmeenergie steigert den Druck im beheizten Kondensat-Sammelbehälter bis das Druckniveau oberhalb des Druck im Hochdruckspeicher liegt, so dass der Umlade-Vorgang, wie bereits beschrieben, gestartet wird. Im Gegensatz zur Variante mit nur einem Kondensat-Sammelbehälter ist in dieser Variante mit permanentem Generator-Betrieb die Erhöhung der Temperatur im Volumen des gaförmigen Arbeitsmedium des umzuladenden Kondensat-Sammelbehälter soweit zu steigern, bis ebenfalls ein Überdruck gegenüber dem Druck im Hochdruckspeicher besteht, damit die dem umzuladenden Kondensat-Sammelbehälter zugeordnete, als Rückschlagventil ausgeprägte, Ventileinheit öffnet und die Umladung des Kondensat gestartet wird.

Auch in dieser Variante des erfindungsgemäßen Druck-Energiespeicher mit thermischer Kondensatpumpe kann der Kondensat-Umladevorgang beschleunigt werden, indem optional, über die speicherprogrammierbare Steuerung (SPS) gesteuert, zeitweise die Wärmezufuhr zum Hochdruck-Speicher unterbrochen wird, um somit eine geringere Erwärmung des Volumen des gasförmigen Arbeitsmedium des umzuladenden Kondensat-Sammelbehälter notwendig zu machen. Hierbei sollte die Temperatur im Hochdruckspeicher jedoch nur soweit sinken, dass der Betrieb der Expansionsmaschine idealerweise nicht unterbrochen werden muss. Die dazu notwendigen Parameter werden von der speicherprogrammierbaren Steuerung (SPS) überwacht und die Temperaturverhältnisse entsprechend gesteuert. Ob diese Option genutzt wird ist im Einzelfall abzuwägen und stellt keine zwingende Voraussetzung für die Variante der Erfindung mit permanentem Generator-Betrieb dar.

In einer weiteren Variante des erfindungsgemäßen Druck-Energiespeicher mit thermischer Kondensatpumpe mit permanentem Generator-Betrieb kann wirkungsgradsteigernd die in Strömungsrichtung vor den schalt- sowie regelbaren Drosseleinheiten mit Rückschlagventil-Funktion anfallende Wärmeverlust-Leistung des Drossel-Vorgang durch Einsatz von Wärmetauschern genutzt werden, um beispielsweise hierüber den im Umlademodus betriebenen Kondensat-Sammelbehälter zusätzlich mit Wärmeenergie zu beaufschlagen, welche dadurch dem Prozess wieder zugeführt wird, solange die Temperaturdifferenzen dies ermöglichen. So werden thermische Verluste entsprechend minimiert. Die damit verbundenen konstruktiven Zusatz-Aufwände sind unter Abwägung ökonomischer Parameter je nach System zu betrachten.

Allen bisher genannten Varianten ist einschränkend gemeinsam, dass durch die für den thermisch auszuführenden Pumpvorgang je nach Variante des erfindungsgemäßen Druck-Energiespeicher mit thermischer Kondensat-Pumpe der bzw. die Kondensat-Sammelbehälter hierfür erwärmt werden und somit die Temperatur im gerade nahezu entleerten Kondensat-Sammelbehälter jetzt auf beispielsweise +10°C statt -28,5°C erhöht ist. Auch wenn ein Teil der Energie der Beheizung des Kondensat-Sammelbehälter mit dem umgepumpten Kondensat in den Hochdruck-Speicher transportiert wurde, verbleibt jedoch ein Anteil der Heizenergie noch im zu diesem Zeitpunkt entleerten Kondensat-Sammelbehälter, welcher somit prinzipbedingt eine erhöhte Temperatur im Vergleich zu einem nicht beheizten Kondensat-Sammalbehälter aufweist. Wird nun nach dem Füllen des zweiten Kondensat-Sammelbehälter dieser erste entleerte Kondensat-Sammelbehälter jetzt zum Befüllen bzw. Sammeln des anfallenden Kondensat genutzt, wäre die Druck- und Temperatur-Differenz zwischen Hochdruck-Speicher und entleertem Kondensat-Sammelbehälter, im Vergleich zum Normalbetrieb, noch verringert, was in erster Linie zu einer Leistungsminderung an der Expansionsmaschine führen würde und weiterhin Probleme beim Kondensationsprozess mit sich bringen kann. Nennenswerte Leistungsschwankungen während des Wechselvorgang der Kondensat-Sammelbehälter wären die Folge.

Eine weitergehende Verbesserung des erfindungsgemäßen Druck-Energiespeicher mit thermischer Kondensatpumpe mit permanentem Generator-Betrieb stellt daher die Verwendung eines, mit beispielsweise jeweils einer zusätzlichen Wärmetauscheinrichtung je Kondensat-Sammelbehälter ausgestatteten, Wärmetauschkreislauf zwischen den Kondensat-Sammelbehältern dar. Die Wärmetauscheinrichtungen sind hierzu im unteren Bereich möglichst weitgehend unterhalb der Flüssigkeitslinien der Kondensat-Sammelbehälter thermisch an diesen gekoppelt anzubringen. In diesem Wärmetauschkreislauf wird, ebenfalls gesteuert durch die speicherprogrammierbare Steuerung (SPS), mit Hilfe mindestens einer Fördereinheit sowie mindestens einer steuerbaren Ventileinheit zyklisch ein, bei den auftretenden Temperaturen, flüssiges Medium umgewälzt.

Erfindungsgemäß ist der Wärmeaustausch zwischen den Kondensat-Sammelbehältern zu dem Zeitpunkt vorzunehmen, kurz bevor der zweite gerade noch in Füllung befindliche Kondensatbehälter seinen höchsten Kondensat-Füllstand erreicht hat und hierbei eine geringe Temperatur von beispielsweise -28,5°C aufweist. Da dieser Behälter zum Einen ohnehin im nächsten Schritt zur Umladung teilweise aufgeheizt werden muss und im ersten entleerten, jetzt noch erwärmten, Kondensat-Sammelbehälter für die Umschaltung auf Kondensationsbetrieb eine niedrige Temperatur von Vorteil wäre, um die Druckdifferenz für die Expansionsmaschine möglichst gleichmässig hoch zu halten, würde so durch den Umwälzvorgang im Wärmetauschkreislauf die Restwärmeenergie aus dem ersten, zu diesem Zeitpunkt entleerten Kondensat-Sammelbehälter, in den zweiten umzuladenen, gerade fast komplett gefüllten Kondensat-Sammelbehälter übertragen und dabei der erste, zu diesem Zeitpunkt noch entleerte, Kondensat-Sammelbehälter abgekühlt und somit ideal für den anstehenden Kondensationsbetrieb vorbereitet werden, ohne nennenswert Energie verschwendet zu haben.

Der Kondensat-Umladevorgang wird nun, wie bereits beschrieben, durch weitere Wärmeenergie-Zufuhr aus dem Wärmeenergie-Speicher zum Volumen des gasförmigen Arbeitsmedium des umzuladenden zweiten Kondensat-Sammelbehälter vorgenommen. Die Prozess-Steuerung erfolgt ebenfalls über die speicherprogrammierbare Steuerung (SPS) in Verbindung mit den vorhandenen Sensorwerten.

Einerseits ist erfindungsgemäß so keine externe Vorkühlung des gerade entleerten und zur Kondensataufnahme bereit stehenden ersten Kondensat-Sammelbehälter nötig und die noch vorhandene Wärmeenergie aus diesem Behälter wird für den Umladevorgang des zu diesem Zeitpunkt gefüllten zweiten Kondensat-Sammelbehälter eingesetzt. Die Temperatur nach Wärmetausch beider Kondensat-Sammelbehälter liegt am entleerten Kondensat-Sammelbehälter aufgrund der Temperatur- sowie Massen-Verhältnisse unterhalb des Mittelwert zwischen beiden beispielsweise gleich dimensionierten Kondensat-Sammelbehältern vor dem Wärmetausch. Somit steht ein höchst effizientes Pumpsystem im erfindungsgemäßen Druck-Energiespeicher mit thermischer Kondensatpumpe bei permanentem Generator-Betrieb zur Verfügung.

Unabhängig der Varianten des erfindungsgemäßen Druck-Energiespeicher mit thermischer Kondensatpumpe gelten auch für diese Erfindung die Gesetze eines Dampf-Kreisprozess mit Expansionsmaschine und die in diesem Zusammenhang definierten Zusammenhänge möglichen Wirkungsgrades in Verbindung mit Art der eingesetzten Expansionsmaschine, dem verwendeten Arbeitsmedium, dem verwendeten Temperaturbereich des Arbeitsmedium und der damit verbundenen Entscheidung des Betrieb der Erfindung im über-, transkritischen oder reinen Sattdampf-Bereich sowie den daraus resultierenden nutzbaren Enthalpie-Differenzen. Unabhängig vom Wirkungsgrad liegt die Leistungsdichte des erfindungsgemäßen Druck-Energiespeicher mit thermischer Kondensatpumpe und ohne mechanisch oder elektrisch ausgeführte Kondensat-Pumpen in einem für den gewerblich nutzbaren Bereich.

Der Grundgedanke eines kostengünstigen, mit wenig bewegten Teilen, auf bestehenden Prinzipien beruhenden und mit gewöhnlichen Komponenten zu realisierenden Druck-Energiespeicher für den gewerblichen Einsatz kann in allen Ausführungen der vorgeschlagenen Erfindung umgesetzt werden. Die Kombination der Merkmale kostengünster Aufbau, brauchbare Leistungsdichte sowie ein durch lediglich thermische Energie gekennzeichneter Energiespeicher kennzeichnen den erfindungsgemäßen Druck-Energiespeicher mit thermischer Kondensatpumpe ohne den Bedarf von mechanisch oder elektromechanisch angetriebenen Kondensat-Pumpen.

Der erfindungsgemäße Druck-Energiespeicher mit thermischer Kondensatpumpe, welcher vom Grundsatz als eine Druck-Speicherkraftwerk betrachtet werden kann, eignet sich idealerweise für Wärme-Kraft-Kopplung in kleinen, mittelgroßen wie auch großen Anlagen mit Schwarzstartfähigkeit oder auch dezentralen Energieversorgungen zur Zwischenspeicherung von Energie, vorzugsweise Wärmeenergie, zur bedarfsweisen Bereitstellung elektrischer oder auch mechanischer Energie. Beispielsweise seien Heizanlagen, auch in Verbindung mit Erdwärme, jegliche Abwärme-Nutzung oder auch Nutzung von Sonnenenergie oder sonstiger Umwelt-Enthalpien mit Zwischenspeicherung der thermischen Energie, zur bedarfsweisen Verstromung genannt. Auch zur Speicherung durch Windkraft direkt produzierter Wärmeenergie und für mobile Systeme ist die beschriebene Erfindung einsetzbar. Auch die Kombination der Verwendung zwischengespeicherter Wärmeenergie mit direkt anfallenden Enthalphien als Energiequellen-Mix ist möglich. Die möglichen Einsatzgebiete sind extrem vielfältig. Die Rentabilität ist durch den Einsatz von nur wenig bewegten Teilen, handelsüblichen Materialien, einem sehr geringen elektrischen Energiebedarf sowie einem weiten möglichen Temperatureinsatz-Bereich sicher gestellt.

Anhand nachfolgender Zeichnungen wird die Erfindung an dargestellten Ausführungsbeispielen näher erläutert. Weitere Merkmale der Erfindung ergeben sich aus der nachfolgenden Beschreibung der Ausführungsbeispiele der Erfindung sowie den beigefügten Zeichnungen mit den Ansprüchen.
**Fig. 1** ein Druck-Energiespeicher mit thermischer Kondensatpumpe der vorliegenden Erfindung.
**Fig. 2** eine Anordnung mit einem Druck-Energiespeicher mit thermischer Kondensatpumpe mit Eignung zum permanenten Generatorbetrieb der vorliegenden Erfindung.

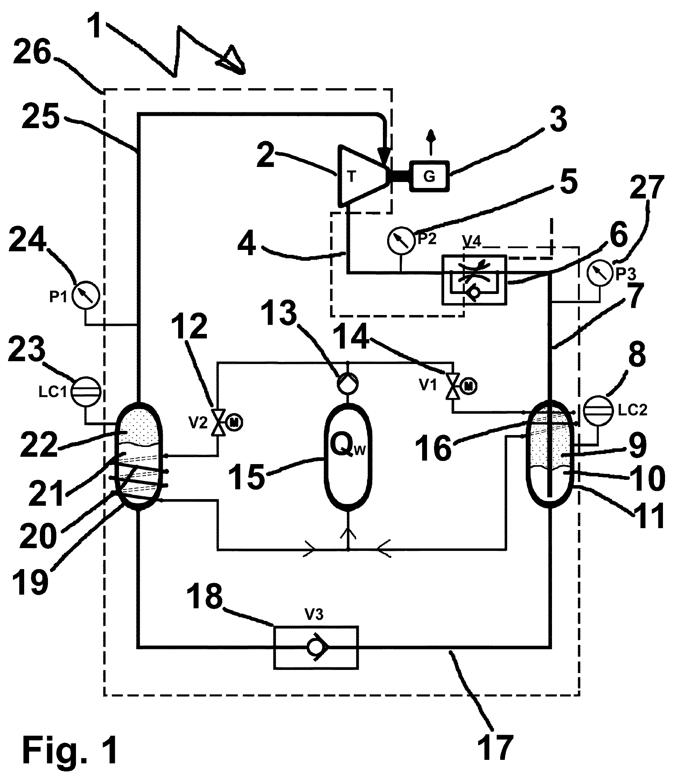

Die **Fig. 1** zeigt die Anordnung eines als geschlossenes System ausgeführten erfindungsgemäßen Druck-Energiespeicher mit thermischer Kondensatpumpe **1,** mit einem Wärmeenergie-Speicher **15,** einer mit dem Wärmeenergie-Speicher **15** verbundenen Fördereinheit **13** sowie der in Förderrichtung der Fördereinheit **13** nachgelagerten regelbaren Ventileinheiten **12** und **14.** Der Ventileinheit **12** nachgelagert ist die zweite Heizeinrichtung **20,** welche thermisch vorzugsweise unterhalb der Flüssigkeitslinie des Arbeitsmedium **21** mit dem Hochdruck-Speicher **19** zur geregelten Zuführung von Wärmeenergie gekoppelt ist.

Der in **Fig. 1** dargestellte erfindungsgemäße Druck-Energiespeicher mit thermischer Kondensatpumpe **1** weist einen Kondensat-Sammelbehälter **11** auf, welcher vom Fassungsvolumen des flüssigen Arbeitsmedium **10** mindestens dem maximalen Volumen des flüssigen Arbeitsmedium **21** entspricht. Ebenfalls der Fördereinheit **13** nachgelagert weist die Erfindung **1** eine Ventileinheit **14** auf, welche die geregelte Zufuhr von Wärmeenergie zur zweiten Heizeinrichtung **16** zur Initiierung des Kondensat-Umladevorgang in den Hochdruck-Speicher **19** ermöglicht. Die zweite Heizeinrichtung **16** ist im Volumen des gasförmigen Arbeitsmedium **9** von Kondensat-Sammelbehälter **11** oder thermisch gekoppelt am Kondensat-Sammelbehälter **11** oberhalb der Flüssigkeitslinie des Arbeitsmedium **10** installiert. Sowohl der Hochdruck-Speicher **19** wie auch der Kondensat-Sammelbehälter **11** enthalten erfindungsgemäß auch gasförmiges Arbeitsmedium **22** und **9** sowie die Pegelsensoren **23** und **8.**

Die im **Fig. 1** dargestellten erfindungsgemäße Druck-Energiespeicher mit thermischer Kondensatpumpe **1** verwendete Volumen-Menge des flüssigen Arbeitsmedium **21** und **10** im nicht überkritischen Temperaturbereich des Arbeitsmedium **21** und **10** entspricht in Summe maximal 85 % des Volumen des Hochdruck-Speicher **19.** Der definierte maximal-Flüssigkeitspegel des Pegelsensor **23** ist in diesem Fall auf weniger als 85 % des Volumen des Hochdruck-Speicher **19** definiert.

Der Vorgang der Kondensat-Umladung des erfindungsgemäßen Druck-Energiespeicher mit thermischer Kondensatpumpe **1** in **Fig. 1** erfolgt ausgehend von der zeitlich zuvor geschlossenen, der ersten Heizeinrichtung zugeordneten, Ventileinheit **12** und der anschließend mit zeitlicher Verzögerung verschlossenen schalt- sowie regelbaren Drosseleinheit mit Rückschlagventil-Funktion **6,** welche damit eine Unterbrechung der Volumen des gasförmigen Arbeitsmedium **22** und **9** von Hochdruckspeicher **19** und Kondensat-Sammelbehälter **11** durchführt und somit den Generatorbetrieb der Expansionsmaschine **2** unterbricht. Die Öffnung der der zweiten Heizeinrichtung von Kondensat-Sammelbehälter **11** zugeordneten Ventileinheit **14** führt nun mit Hilfe der Fördereinheit **13** der zweiten Heizeinrichtung **16** Wärmeenergie zu, welche durch ihre thermische Kopplung zum Volumen des gasförmigen Arbeitsmedium **9** des Kondensat-Sammelbehälter **11** dem gasförmigen Arbeitsmedium **9** in Kondensat-Sammelbehälter **11** Wärmeenergie zuführt und somit zu einer Druckerhöhung im Kondensat-Sammelbehälter **11** führt.

In **Fig. 1** dargestellt wird bei Erreichen von Überdruck im Kondensat-Sammelbehälter **11** gegenüber dem Druck im Hochdruck-Speicher **19** die als Rückschlagventil ausgebildete, die dem umzuladenden Kondensat-Sammelbehälter **11** zugeordnete, Ventileinheit **18** geöffnet, so dass über die Verbindung **17** unterhalb der Flüssigkeitslinien der Arbeitsmedien **21** und **10,** das flüssige Arbeitsmedium **10** durch den Überdruck in den Hochdruck-Speicher **19** transportiert wird. Dieser Vorgang wird fortgeführt bis entweder durch Pegelsensor **23** ein maximaler Füllstand in Hochdruck-Speicher **19** oder durch Pegelsensor **8** ein minimaler Flüssigkeits-Pegel in Kondensat-Sammelbehälter **11** gemeldet wird oder die Drucksensoren **24** oder **27** einen definierten Maximalwert überschreiten. Die der zweiten Heizeinrichtung **16** zugeordnete Ventileinheit **14** wird bereits vor Erreichen dieser definierten Sensorwerte, durch eine speicherprogrammierbare Steuerung (SPS) gesteuert, geschlossen, um einen unnötig hohen Temperatur-Pegel in Kondensat-Sammelbehälter **11** beim anschließenden Kondensationsprozess bei erneutem Anlaufen des Generatorbetrieb des erfindungsgemäßen Druck-Energiespeicher mit thermischer Kondensat-Pumpe **1** zu verhindern.

In **Fig. 1** dargestellt ist die Verbindung der Volumina des gasförmigen Arbeitsmedium **22** und **9** des erfindungsgemäßen Druck-Energiespeicher mit thermischer Kondensatpumpe **1,** welche über die Verbindung **25,** die Expansionsmaschine **2** mit an der Expansionsmaschine **2** gekoppeltem Elektrogenerator **3,** die Verbindung **4** mit einer in Flussrichtung nachgelagerten schalt- sowie regelbaren Drosseleinheit mit Rückschlagventil-Funktion **6** sowie die Verbindung **7,** welche im Kondensat-Sammelbehälter **11** im unteren Bereich unterhalb der Flüssigkeitslinie des Arbeitsmedium **10** endet, erfolgt. Das so im thermodynamisch geschlossenem Kreisprozess unter Überdruck, gegenüber dem im Volumen des gasförmigen Arbeitsmedium **9** des Kondensat-Sammelbehälter **11** befindliche gasförmige Arbeitsmedium, stehende gasförmige Arbeitsmedium **22** von Hochdruckspeicher **19** wird somit der Expansionsmaschine **2** im Generatorbetrieb zur Expansion unter Verrichtung von Volumenarbeit zugeführt. Während des Generatorbetrieb wird der ersten Heizeinrichtung **20** fortlaufend Wärmeenergie aus dem Wärmeenergie-Speicher **15** über Fördereinheit **13** sowie der der ersten Heizeinrichtung **20** zugeordneten Ventileinheit **12** zugeführt, um so permanent den an Drucksensor **24** definierten Arbeitsdruck im Hochdruckspeicher **19** durch Verdampfung von Arbeitsmedium **21** herzustellen.

Die in **Fig. 1** abgebildete schalt- sowie regelbare mit Rückschlagventil-Funktion ausgeprägte Drosseleinheit **6** des erfindungsgemäßen Druck-Energiespeicher mit thermischer Kondensatpumpe **1** stellt im Generatorbetrieb sicher, dass das gasförmige Arbeitsmedium am Ausgang der Expansionsmaschine **2** in Strömungsrichtung anschließend einer weiteren Drosselung und somit der durch den Joule-Thomson-Effekt beschriebenen Abkühlung des Arbeitsmedium zwecks Kondensation in Richtung Kondensat-Sammelbehälter **11** zugeführt wird. Eine unnötig starke Drosselung in Drosseleinheit **6** sollte aufgrund damit verbundener Energieverluste unterbleiben und ist bei der Anlagenplanung zu berücksichtigen. Die Verbindung **7** wird im Kondensat-Sammelbehälter **11** bis unterhalb der minimalen Flüssigkeitslinie des flüssigen Arbeitsmedium **10** geführt. Der Arbeitspunkt der schalt- sowie regelbaren Drosseleinheit mit Rückschlagventil-Funktion **6** wird so eingestellt, dass an den Drucksensoren **5** sowie **27** der gegebenenfalls vorhandene Tripelpunkt des verwendeten Arbeitsmedium mit Sicherheit nicht unterschritten wird, um die sonst eintretende sofortige Vereisung der Expansionsmaschine **2** oder der Drosseleinheit **6** zu verhindern. Werden zuvor definierte Druckwerte der Drucksensoren **5** und **27** unterschritten, wird, gesteuert durch eine speicherprogrammierbare Steuerung (SPS), die Drosseleinheit **6** geschlossen. Eine Öffnung von Drosseleinheit 6 erfolgt erst, wenn alle dazu notwendigen Bedingungen an der speicherprogrammierbaren Steuerung (SPS) vorliegen.

In **Fig. 1** sind dargestellt der Drucksensor **24** des Hochdruckspeicher **19** in Verbindung **25,** der Drucksensor 5 in Verbindung **4** zwischen Expansionsmaschine **2** und schaltsowie regelbarer Drosseleinheit mit Rückschlagventil-Funktion **6** sowie der Drucksensor **27** in Verbindung 7 zum Kondensat-Sammelbehälter **11** des erfindungsgemäßen Druck-Energiespeicher mit thermischer Kondensatpumpe **1,** welche als Eingangsgrößen in Verbindung mit den Werten der Pegel-Sensoren **23** und **8** die Reglung der Drosseleinheit 6 sowie der Ventileinheiten **12** und **14** für den Generatorbetrieb sowie die Kondensat-Umladung über eine speicherprogrammierbare Steuerung (SPS) ermöglichen.

In **Fig. 1** weiterhin abgebildet ist die thermische Isolierung **26** des erfindungsgemäßen Druck-Energiespeicher mit thermischer Kondensatpumpe **1,** wobei, außer dem Elektrogenerator **3,** möglichen Anzeige-Instrumenten von Messgrößen der Sensoren **5, 23, 24, 27** und **8** und Teilen der Drosseleinheit **6** sowie der Expansionsmaschine **2,** alle sonstigen Komponenten sowohl zur Verhinderung thermischer Verluste wie auch der Minimierung von Vereisung durch kondensierende Umgebungsfeuchtigkeit mit feuchtigkeitsbeständigem Isolierstoff **26** thermisch sowohl zur Umgebung wie auch voneinander isoliert sind.

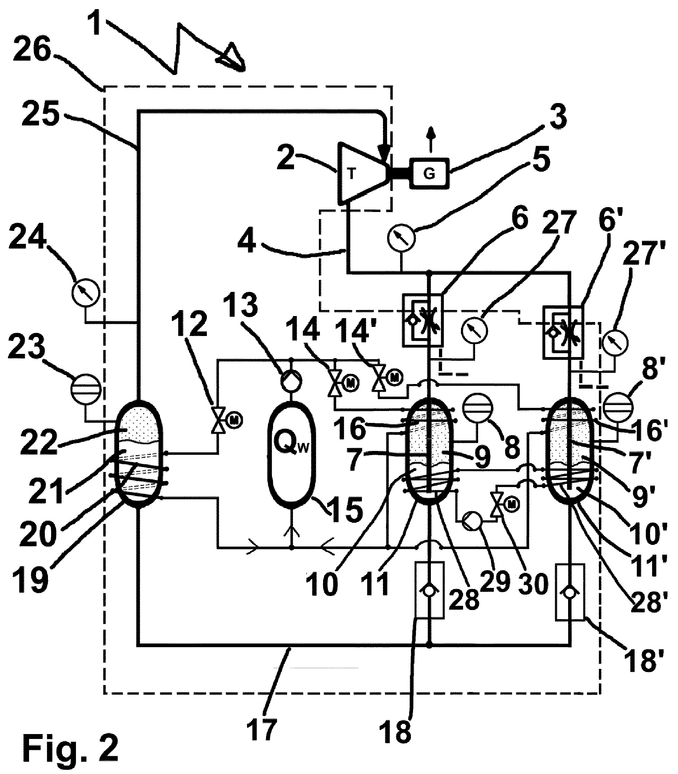

Die **Fig. 2** zeigt eine Anordnung des erfindungsgemäßen Druck-Energiespeicher mit thermischer Kondensatpumpe **1** mit Darstellung der für den wahlweise permanenten Generator-Betrieb eingesetzten Komponenten. Durch die parallele Ausführung des Kondensator-Zweig mit den Komponenten schalt- sowie regelbaren Drosseleinheiten mit Rückschlagventil-Funktion **6, 6',** den Drucksensoren **27, 27',** den Kondensat-Sammelbehältern **11, 11',** den Heizeinrichtungen **16, 16',** den Ventileinheiten **14, 14',** den Pegel-Sensoren **8, 8'** sowie den Kondensat-Sammelbehältern **11, 11'** in Strömungsrichtung nachgelagerten Ventileinheiten mit Rückschlagventil-Funktion **18, 18'** ist bedarfsweise auch ein permanenter ununterbrochener Generatorbetrieb des erfindungsgemäßen Druck-Energiespeicher mit thermischer Kondensatpumpe **1** möglich.

In dem in **Fig. 2** abgebildeten erfindungsgemäßen Druck-Energiespeicher mit thermischer Kondensatpumpe **1** wird der permanente Generator-Betrieb erfindungsgemäß durch wechselweisen Kondensations- sowie Umladungs-Prozess der Kondensat-Sammelbehälter **11, 11'** realisiert. Hierzu wird jeweils ein Kondensat-Sammelbehälter **11** oder **11'** im Kondensationsmodus betrieben während der zweite gefüllte Kondensat-Sammelbehälter **11'** oder **11** durch Zuführung von Wärmeenergie aus dem Wärmeenergie-Speicher **15,** gesteuert über die speicherprogrammierbare Steuerung (SPS), über die Heizeinrichtung **16'** oder **16** in den Umlademodus durch Druckerhöhung versetzt wird. Die Zuführung von Wärmeenergie steigert den Druck im beheizten Kondensat-Sammelbehälter **11'** oder **11,** bis das Druckniveau oberhalb des Druck im Hochdruckspeicher **19** liegt, so dass der Umlade-Vorgang des flüssigen Arbeitsmedium **10'** oder **10** in Richtung Hochdruckspeicher **19** über die als Rückschlagventil ausgeprägte Ventileinheit **18'** oder **18** gestartet wird.

In **Fig. 2** weiterhin abgebildet der erfindungsgemäße Druck-Energiespeicher mit thermischer Kondensatpumpe **1** mit Darstellung der an den Kondensat-Sammelbehältern **11** und **11'** thermisch hiermit gekoppelten Wärmetauscheinrichtungen **28** und **28'** sowie die ebenfalls durch eine speicherprogrammierbare Steuerung (SPS) steuerbaren Komponenten Fördereinheit des Wärmetauschkreislauf der Kondensat-Sammelbehälter **29** sowie Ventileinheit **30** des Kondensat-Sammelbehälter-Wärmetauschkreislauf. Durch den mit Hilfe der speicherprogrammierbaren Steuerung (SPS) gesteuerten zyklischen Betrieb dieses Wärmetauscher-System zwischen den Kondensat-Sammelbehältern **11** und **11',** zeitlich vor Einleitung eines Kondensat-Umladungsvorgang aus Kondensat-Sammelbehälter **11** oder **11',** wird die Effizienz der zyklisch stattfindenden Kondensat-Umladevorgänge aus den Kondensat-Sammelbehältern **11** und **11'** hin zum Hochdruckspeicher **19** gesteigert durch Vorerwärmung des umzuladenden Kondensat-Sammelbehälter **11** oder **11'** sowie Kühlung des anschließend zur Kondensat-Sammlung verwendeten Kondensat-Sammelbehälter **11'** oder **11.**

In **Fig. 2** dargestellt wird zur Sicherstellung der Kondensat-Umladung aus Kondensat-Sammelbehälter **11'** oder **11,** durch die speicherprogrammierbare Steuerung (SPS) gesteuert, die Wärmeenergie-Zufuhr aus dem Wärmeenergie-Speicher **15** über die der ersten Heizeinrichtung **20** zugeordnete Ventileinheit **12** in der Form reduziert, dass der Druck am Drucksensor **24** ausreichend unterhalb des kritischen Druck des Arbeitsmedium **21** liegt und somit der Umladevorgang flüssigen Arbeitsmediums aus **10'** oder **10** erfolgt. Zur Sicherstellung eines permanenten Generator-Betrieb befindet sich mindestens ein Kondensat-Sammelbehälter **11** oder **11'** im Kondensations-Modus. Die dazu notwendige Steuerung der schalt- sowie regelbaren Drosseleinheiten mit Rückschlagventil-Funktion **6, 6',** Ventileinheiten **14, 14'** und **12** unter Berücksichtigung der Sensorwerte der Sensoren **5, 27, 27', 8, 8', 23** sowie **24** erfolgt durch eine SPS (speicherprogrammierbare Steuerung), welche als Stand der Technik angenommen wird. Dieser regelbare thermodynamische Kreisprozess innerhalb des erfindungsgemäßen Druck-Energiespeicher mit thermischer Kondensat-Pumpe **1** stellt somit einen auf Wärmeenergie basierenden und ohne mechanische oder elektrisch betriebene Kondensat-Pumpen oder Kompressoren realisierbaren Energie-Speicher hoher Effizienz und brauchbarer, gewerblich nutzbarer, Energiedichte dar.

### Bezugszeichenliste

(1) erfindungsgemäßer Druck-Energiespeicher mit thermischer Kondensatpumpe
(2) Expansionsmaschine
(3) Elektrogenerator
(4) Verbindung zwischen Expansionsmaschine und Drosseleinheit(en)
(5) Drucksensor der Expansionsmaschine in Strömungsrichtung nachgelagert
(6) erste schalt- sowie regelbare Drosseleinheit mit Rückschlagventil-Funktion (6') zweite schalt- sowie regelbare Drosseleinheit mit Rückschlagventil-Funktion
(7) Verbindung zum ersten Kondensat-Sammelbehälter
(7') Verbindung zum zweiten Kondensat-Sammelbehälter
(8) Pegelsensor des ersten Kondensat-Sammelbehälter
(8') Pegelsensor des zweiten Kondensat-Sammelbehälter
(9) gasförmiges Arbeitsmedium des ersten Kondensat-Sammelbehälter (9') gasförmiges Arbeitsmedium des zweiten Kondensat-Sammelbehälter
(10) flüssiges Arbeitsmedium des ersten Kondensat-Sammelbehälter (10') flüssiges Arbeitsmedium des zweiten Kondensat-Sammelbehälter
(11) erster Kondensat-Sammelbehälter
(11') zweiter Kondensat-Sammelbehälter
(12) Ventileinheit der Heizeinrichtung des Hochdruckspeicher
(13) Fördereinheit des Wärmeenergie-Speicher
(14) Ventileinheit der Heizeinrichtung des ersten Kondensat-Sammelbehälter (14') Ventileinheit der Heizeinrichtung des zweiten Kondensat-Sammelbehälter
(15) Wärmeenergie-Speicher
(16) Heizeinrichtung des ersten Kondensat-Sammelbehälter
(16') Heizeinrichtung des zweiten Kondensat-Sammelbehälter
(17) Verbindung zwischen Kondensat-Sammelbehälter und Hochdruckspeicher
(18) Ventileinheit mit Rückschlagventil-Funktion des ersten Kondensat-Sammelbehälter (18') Ventileinheit mit Rückschlagventil-Funktion des zweiten Kondensat-Sammelbehälter
(19) Hochdruckspeicher
(20) Heizeinrichtung des Hochdruckspeicher
(21) flüssiges Arbeitsmedium des Hochdruckspeicher
(22) gasförmiges Arbeitsmedium des Hochdruckspeicher
(23) Pegelsensor des Hochdruckspeicher
(24) Drucksensor des Hochdruckspeicher
(25) Verbindung zwischen Hochdruckspeicher und Expansionsmaschine
(26) feuchtigkeitsbeständiger Isolierstoff
(27) Drucksensor des ersten Kondensat-Sammelbehälter
(27') Drucksensor des zweiten Kondensat-Sammelbehälter
(28) Wärmetauscheinrichtung des ersten Kondensat-Sammelbehälter (28') Wärmetauscheinrichtung des zweiten Kondensat-Sammelbehälter
(29) Fördereinheit des Wärmetauschkreislauf der Kondensat-Sammelbehälter
(30) steuerbare Ventileinheit des Kondensat-Sammelbehälter-Wärmetauschkreislauf

### Zitierte Patentliteratur

- DE 202009003297 U1 (Streit, Alexander; Streit, Egon) 06.03.2009
- DD 000000137753 A1 (Boschnakow, Ivan; Wohlfahrt, Peter; Jung, Gernot; Thomasius, Ulrich) 13.06.1978
- DE 101 26 403 A1
- US 2006 / 0059 912 A1
- US 4 006 595 A
- US 5 548 957 A

## Patentansprüche

1. Druck-Energiespeicher mit thermischer Kondensatpumpe **(1)** mit mindestens zwei DruckBehältern **(11, 19),** wobei es sich beim Druckbehälter **(11)** um einen Kondensat-Sammelbehälter und beim Druckbehälter **(19)** um einen Hochdruckspeicher handelt, mindestens einem Wärmeenergie-Speicher **(15),** mindestens einer Expansionsmaschine **(2),** sowie mindestens einem in geschlossenem thermodynamischen Kreisprozess verwendeten Arbeitsmedium in unterschiedlichen Aggregatzuständen, wobei es sich bei **(10, 21)** um flüssiges Arbeitsmedium und bei **(9, 22)** um gasförmiges Arbeitsmediums der Druckbehälter **(11, 19)** handelt. Weiterhin weist der Druck-Energiespeicher mit thermischer Kondensatpumpe **(1)** mindestens eine Heizeinrichtung **(16)** des Kondensat-Sammelbehälter **(11)** oberhalb der Flüssigkeitslinie des Kondensat-Sammelbehälter **(11),** mindestens eine Heizeinrichtung **(20)** des Hochdruckspeicher **(19)** im Bereich größtenteils unterhalb der Flüssigkeitslinie des flüssigen Arbeitsmedium **(21)** des Hochdruckspeicher **(19)** sowie mindestens zwei Pegel-Sensoren **(8, 23)** der Druck-Behälter **(11, 19)** auf, wobei Pegel-Sensor **(8)** Kondensat-Sammelbehälter **(11)** und Pegel-Sensor (23) Hochdruckspeicher **(19)** zugeordnet ist. Der Druck-Energiespeicher mit thermischer Kondensatpumpe **(1)** weist weiterhin mindestens eine Fördereinheit **(13)** des Wärmeenergie-Speicher **(15),** mindestens zwei, in Förderrichtung hinter der Fördereinheit **(13),** eingesetzte steuerbare Ventil-Einheiten **(12, 14)** zur gesteuerten Zuführung von Wärmeenergie aus Wärmequelle **(15)** zu den Heizeinrichtungen **(16, 20)** auf, wobei es sich bei Ventileinheit **(12)** um die Ventileinheit der Heizeinrichtung **(20)** des Hochdruckspeicher **(19)** und bei Ventileinheit **(14)** um die Ventileinheit der Heizeinrichtung **(16)** des Kondensat-Sammelbehälter **(11)** handelt. Weiterhin weist der Druck-Energiespeicher **(1)** mindestens eine Verbindung **(17)** von Kondensat-Sammelbehälter **(11)** zum Hochdruckspeicher (19) zwischen den unteren Punkten der Flüssigkeits-Volumina **(10, 21)** von Kondensat-Sammelbehälter **(11)** und Hochdruckspeicher **(19),** mindestens eine dem Kondensat-Sammelbehälter **(11)** zugeordnete mit Rückschlagventil-Funktion ausgestattete Ventileinheit **(18)** des Kondensat-Sammelbehälter **(11)** in Verbindung **(17),** mindestens eine in Strömungsrichtung der Expansionsmaschine **(2)** nachgelagerte Verbindung **(4),** wobei es sich um eine Verbindung zwischen Expansionsmaschine **(2)** und schalt- sowie regelbarer Drosseleinheit mit Rückschlagventil-Funktion **(6)** handelt, mindestens eine der Verbindung **(4)** in Strömungsrichtung nachgelagerte schalt- sowie regelbare Drosseleinheit mit Rückschlagventil-Funktion **(6)** sowie mindestens eine der schalt- sowie regelbaren Drosseleinheit mit Rückschlagventil-Funktion **(6)** nachgelagerte Verbindung **(7),** wobei es sich um eine Verbindung von der schalt- sowie regelbaren Drosseleinheit mit Rückschlagventil-Funktion **(6)** zum Kondensat-Sammelbehälter **(11)** handelt, welche möglichst unterhalb des niedrigsten Flüssigkeitspegel der Flüssigkeit **(10)** endet, auf.

2. Druck-Energiespeicher mit thermischer Kondensatpumpe nach Anspruch 1, **dadurch gekennzeichnet, dass** Hochdruckspeicher **(19)** und Expansionsmaschine (2) durch mindestens eine Verbindung **(25)** zwischen dem, aus axialer Sicht, obersten Punkt von Hochdruckspeicher **(19)** und der Expansionsmaschine **(2)** miteinander verbunden sind.

3. Druck-Energiespeicher mit thermischer Kondensatpumpe nach Anspruch 1 und 2, **dadurch gekennzeichnet, dass** an den Verbindungen **(25, 4, 7)** jeweils mindestens ein Drucksensor **(24, 5, 27)** mündet, um mit den Werten der Drucksensoren **(24, 5, 27)** sowie der Pegel-Sensoren **(23, 8),** gesteuert über eine speicherprogrammierbare Steuerung (SPS), die Fördereinheit **(13)** des Wärmeenergie-Speicher **(15),** die Ventileinheiten **(12, 14)** sowie die schalt- sowie regelbare Drosseleinheit mit Rückschlagventil-Funktion **(6)** entsprechend den in der speicherprogrammierbaren Steuerung (SPS) vorgegebenen Parameter zu regeln.

4. Druck-Energiespeicher mit thermischer Kondensatpumpe nach einem der vorstehenden Ansprüche, **dadurch gekennzeichnet, dass** die Erfindung (1) in mindestens zwei Betriebsmodi betrieben werden kann. Diese sind der Generator-Betrieb sowie der Kondensat-Umlade-Modus.

5. Druck-Energiespeicher mit thermischer Kondensatpumpe nach einem der vorstehenden Ansprüche, **dadurch gekennzeichnet, dass** im Betriebsmodus Generator-Betrieb aus Wärmeenergie-Speicher **(15),** per speicherprogrammierbarer Steuerung (SPS) gesteuert, über Fördereinheit **(13)** des Wärmeenergie-Speicher **(15),** Ventileinheit **(12)** sowie Heizeinrichtung **(20)** des Hochdruckspeicher **(19)** dem Arbeitsmedium **(21)** in Hochdruckspeicher **(19)** Wärmeenergie zugeführt wird, welche entsprechend der Dampfdruckkurve des Arbeitsmedium (**21**, **10**) zu einem Arbeitsdruck des gasförmigen Arbeitsmedium **(22)** in Hochdruckspeicher **(19)** sowie Verbindung **(25)** zwischen Hochdruckspeicher **(19)** und Expansionsmaschine **(2)** führt, welches zur Verrichtung von Volumenarbeit der Expansionsmaschine **(2)** zugeführt wird.

6. Druck-Energiespeicher mit thermischer Kondensatpumpe nach einem der vorstehenden Ansprüche, **dadurch gekennzeichnet, dass** das im Generator-Betrieb in Expansionsmaschine **(2)** expandierte gasförmige Arbeitsmedium **(22)** über Verbindung **(4),** mindestens einer schalt- sowie regelbaren Drosseleinheit mit Rückschlagventil-Funktion **(6)** zur Sicherstellung der Verhinderung des unterschreiten eines Tripelpunkt des gasförmigen Arbeitsmedium **(22)** sowie der Kondensation des gasförmigen Arbeitsmedium in Verbindung **(7)** zum Kondensat-Sammelbehälter **(11)** und Kondensat-Sammelbehälter **(11)** zugeführt wird. Weiterhin wird die Verbindung **(7)** im Kondensat-Sammel-Behälter **(11)** bis unterhalb des vorgesehenen niedrigsten Flüssigkeitspegel des flüssigen Arbeitsmedium **(10)** in Kondensat-Sammelbehälter **(11)** geführt.

7. Druck-Energiespeicher mit thermischer Kondensatpumpe nach einem der vorstehenden Ansprüche, **dadurch gekennzeichnet, dass** der Generator-Betrieb beendet wird, wenn der Pegel des flüssigen Arbeitsmedium **(10)** in Kondensat-Sammelbehälter **(11)** seinen definierten maximalen Pegel oder der Pegel des flüssigen Arbeitsmedium **(21)** in Hochdruckspeicher **(19)** seinen definierten minimalen Pegel erreicht hat. Dazu wird Ventileinheit **(12)** der Heizeinrichtung (20) des Hochdruckspeicher **(19)** und anschließend die schalt- sowie regelbare Drosseleinheit mit Rückschlagventil-Funktion (6) geschlossen.

8. Druck-Energiespeicher mit thermischer Kondensatpumpe nach einem der vorstehenden Ansprüche, **dadurch gekennzeichnet, dass** der Umlade-Modus des flüssigen Arbeitsmedium **(10)** aus Kondensat-Sammelbehälter **(11)** in Hochdruckspeicher **(19)** über Verbindung **(17)** zwischen Kondensat-Sammelbehälter **(11)** und Hochdruckspeicher **(19)** sowie die mit Rückschlagventil-Funktion ausgestattete Ventileinheit **(18)** des Kondensat-Sammelbehälter **(11)** gestartet wird durch Öffnen der Ventileinheit **(14)** bei geschlossener Ventileinheit (12) und somit Zuführung von Wärmeenergie aus Wärmeenergie-Speicher **(15),** über Fördereinheit **(13),** Ventileinheit **(14)** sowie Heizeinrichtung **(16)** zum Volumen des gasförmiges Arbeitsmedium **(9)** im Kondensat-Sammelbehälter **(11)** und somit, entsprechend der Dampfdruckkurve des flüssigen Arbeitsmedium (**21**, **10**), zu einem Anstieg des Gasdruck des gasförmiges Arbeitsmedium **(9)** in Kondensat-Sammelbehälter **(11)** führt. Bei Erreichen eines Überdruck des gasförmiges Arbeitsmedium **(9)** gegenüber dem Druck des Arbeitsmedium **(22)** im Hochdruckspeicher **(19)** des Druck-Energiespeicher mit thermischer Kondensatpumpe **(1)** öffnet die mit Rückschlagventil-Funktion ausgestattete Ventileinheit **(18)** bis ein definierter maximaler Flüssigkeits-Pegel an Pegel-Sensor **(23)** des Hochdruckspeicher **(19),** ein definierter minimaler Flüssigkeits-Pegel an Pegel-Sensor **(8)** des Kondensat-Sammelbehälter **(11)** oder ein überschreiten eines definierten maximalen Druck an einer der Drucksensoren **(24, 27)** erreicht wird, was zur Schließung per speicherprogrammierbarer Steuerung (SPS) der Ventileinheit **(14)** der Heizeinrichtung **(16)** des Kondensat-Sammelbehälter **(11)** und somit Beendigung der Energiezufuhr zum Volumen des gasförmigen Arbeitsmedium **(9)** des Kondensat-Sammelbehälter **(11)** führt, womit der Umlade-Vorgang beendet ist und der Generator-Betrieb wiederaufgenommen werden kann.

9. Druck-Energiespeicher mit thermischer Kondensatpumpe nach einem der vorstehenden Ansprüche, **dadurch gekennzeichnet, dass** durch parallele Auslegung der Kondensat-Sammelbehälterpfade mit den Komponenten schalt- sowie regelbare Drosseleinheiten mit Rückschlagventil-Funktion **(6, 6'),** Drucksensoren **(27, 27'),** Pegel-Sensoren **(8, 8'),** Verbindungen **(7, 7')** zu Kondensat-Sammelbehältern **(11,11'),** Ventileinheiten **(14, 14')** der Heizeinrichtungen **(16, 16')** der Kondensat-Sammelbehälter **(11,11'),** Heizeinrichtungen **(16, 16')** der Kondensat-Sammelbehälter **(11,11'),** Kondensat-Sammelbehälter **(11,11')** sowie mit Rückschlagventil-Funktion ausgestattete Ventileinheiten (**18**, **18'**) der Kondensat-Sammelbehälter **(11,11')** ein permanenter Generator-Betrieb des Druck-Energiespeicher mit thermischer Kondensatpumpe **(1)** durch wechselweisen Betrieb der Kondensat-Sammelbehälter **(11,11')** sowohl im Kondensations- wie auch im Umlade-Modus, ermöglicht wird. Dabei wird immer mindestens einer der Kondensat-Sammelbehälter **(11,11')** im Kondensations-Modus betrieben, um den permanenten Generator-Betrieb des Druck-Energiespeicher mit thermischer Kondensatpumpe **(1)** zu ermöglichen.

10. Druck-Energiespeicher mit thermischer Kondensatpumpe nach einem der vorstehenden Ansprüche, **dadurch gekennzeichnet, dass** die in Verbindung **(4)** zwischen Expansionsmaschine **(2)** und schalt- sowie regelbaren Drosseleinheiten mit Rückschlagventil-Funktion **(6, 6')** anfallende und zur Kondensation des gasförmigen Arbeitsmedium **(22)** nach Drosseleinheit **(6, 6')** abzuführende Wärmeenergie an Verbindung **(4)** über einen Wärmetauscher zur Weiterverwendung des im Umlade-Modes betriebenen Kondensat-Sammelbehälter **(11,11')** abgeführt werden kann, soweit hier eine nutzbare Temperaturdifferenz besteht.

11. Druck-Energiespeicher mit thermischer Kondensatpumpe nach einem der vorstehenden Ansprüche, **dadurch gekennzeichnet, dass** zur Sicherstellung der Kondensation des gasförmigen Arbeitsmedium **(22)** in Strömungsrichtung nach den schalt- sowie regelbaren Drosseleinheiten mit Rückschlagventil-Funktion **(6, 6')** die Verbindung **(4)** zwischen Expansionsmaschine **(2)** und schalt- sowie regelbaren Drosseleinheiten mit Rückschlagventil-Funktion **(6, 6')** thermisch gekoppelt mit Verbindungen **(7, 7')** zwischen den schalt- sowie regelbaren Drosseleinheiten mit Rückschlagventil-Funktion **(6, 6')** und Kondensat-Sammelbehältern **(11, 11')** ausgeführt wird.

12. Druck-Energiespeicher mit thermischer Kondensatpumpe nach einem der vorstehenden Ansprüche, **dadurch gekennzeichnet, dass** bei paralleler Auslegung der Kondensat-Sammelbehälterpfade nach Anspruch 9 die in den Kondensat-Sammelbehältern **(11,11')** aus dem Kondensationsprozess vorhandene geringe Temperatur effizienzsteigernd über mindestens zwei Wärmetausch-Einrichtungen **(28, 28')** der Kondensat-Sammelbehälter **(11, 11'),** mindestens eine Fördereinheit (29) des Wärmetauschkreislauf der Kondensat-Sammelbehälter **(11,11')** sowie mindestens eine steuerbare Ventileinheit **(30)** des Kondensat-Sammelbehälter-Wärmetauschkreislauf mit der aus dem vorangehenden Kondensat-Umlade-Vorgang am entleerten Kondensat-Sammelbehälter **(11', 11)** vorhandenen Restwärme, über eine speicherprogrammierbare Steuerung (SPS) gesteuert, zyklisch ausgetauscht wird.

13. Druck-Energiespeicher mit thermischer Kondensatpumpe nach einem der vorstehenden Ansprüche, **dadurch gekennzeichnet, dass** bis auf die Komponenten Verbindung **(4),** Teile der schalt- sowie regelbaren Drosseleinheiten mit Rückschlagventil-Funktion **(6, 6'),** Elektro-Generator **(3)** sowie gegebenenfalls eingesetzte Anzeigeinstrumente, alle weiteren Komponenten thermisch sowohl gegeneinander als auch gegen die Umgebung der Erfindung **(1)** mit einem feuchtigkeitsbeständigen Isolierstoff **(26)** isoliert werden.
